# EUROPEAN PATENT APPLICATION

(11) **EP 4 692 571 A1**
(43) Date of publication of application: **11.02.2026**
(21) Application number: 23930821.6
(22) Date of filing: 13.11.2023
(51) Int. Cl.: F16B 7/04

(54) **JOINING MEMBER AND FRAMEWORK STRUCTURE**

(30) Priority: 30.03.2023 JP 2023054653
(71) Applicant: A Co., Ltd., Gifu 503-0234 (JP)
(72) Inventor: KADONO, Keiichi, Gifu 503-0234 (JP)
(74) Representative: Epping - Hermann - Fischer
(86) International application number: PCT/JP2023/040706
(87) International publication number: WO 2024/202192

(57) **Abstract**

In a joining member including a first joining member (10A), a second joining member (20), and a securing member (50), the first joining member (10A) includes an angular tube section (11), a pair of first insertion segments (12) and a pair of first insertion segments (13) respectively extending in an X and a Y direction from the angular tube section (11), and a securing slit (14) passes through a side surface of the angular tube section (11) into which the securing member (50) is inserted, and the second joining member (20) includes a planar portion (21), a pair of second insertion segments (22) extending from the planar portion (21), a pair of linkage insertion segments (23) extending toward the opposite side and inserted in the angular tube section (11), and a securing member retainer (28) provided between the pair of linkage insertion segments (23) for retaining the securing member (50).

## Description

### Technical Field

The present invention relates to joining members for joining tubular members to each other, and to framework structures constructed by joining tubular members to each other by using the joining members.

### Background Art

The present inventor has proposed joining members used for joining tubular members, such as angular pipes, to each other to construct a framework structure. Each joining member has multiple insertion segments to which the tubular members are externally fitted, and is manufactured by extrusion-molding metal (Patent Literature 1).

In Patent Literature 1, when a three-dimensional framework structure is to be constructed, first joining members and second joining members are used as the joining members. Specifically, each first joining member includes a base that is a solid cube and that has a hole extending therethrough in the extrusion direction as a Z direction, and first insertion segments extending from side surfaces of the base in an X direction and a Y direction that are orthogonal to the Z direction. By inserting the first insertion segments of the first joining member into the end of each tubular member, a two-dimensional-frame-like framework structure in the X-Y direction can be constructed. Each second joining member includes a protrusion extending from a square planar portion, and second insertion segments extending from a surface of the planar portion opposite from the protrusion. The protrusion of the second joining member is fitted into the hole in the first joining member, and the second insertion segments are inserted into the corresponding end of a tubular member, so that the tubular member is erected perpendicularly to the two-dimensional-frame-like framework structure, whereby a three-dimensional-frame-like framework structure can be constructed.

In the technology according to Patent Literature 1, the first joining member and the second joining member (joining members), in addition to the tubular members, can be formed of extrusion-molded bodies, so that the tubular members and the joining members can be composed of a metallic material having the same composition. Accordingly, by using these joining members, a framework structure with no possibility of distortion occurring due to different thermal expansion coefficients can be constructed.

However, in the technology according to Patent Literature 1, since the first joining member and the second joining member are connected to each other by fitting the protrusion into the hole, it is difficult to obtain sufficient connection strength. Although it is conceivable to weld the first joining member and the second joining member together, this is problematic in that the welding process is troublesome and that the environment where such a process can be performed is limited.

### Citation List

### Patent Literature

PTL 1: Japanese Unexamined Patent Application Publication No. 2021-178330

### Summary of Invention

### Technical Problem

In view of the circumstances described above, an object of the present invention is to provide a joining member capable of enhancing the joining strength between tubular members, and a framework structure constructed by joining the tubular members to each other by using the joining member.

### Solution to Problem

In order to solve the aforementioned problems, a joining member according to the present invention is provided. The joining member includes a first joining member, a second joining member, and a securing member. The first joining member includes: a rectangular-parallelepiped or cubical angular-pipe-like angular tube section; a pair of first insertion segments extending from each of at least two side surfaces of four side surfaces parallel to a Z direction as an axial direction of the angular tube section, the pair of first insertion segments extending in an X direction or a Y direction orthogonal to the Z direction from positions located inward by a predetermined distance relative to a pair of side edges, extending in the Z direction, of each of the at least two side surfaces; and a securing slit that passes in a thickness direction through each of an opposing pair of the side surfaces of the angular tube section and to which the securing member is inserted. The second joining member includes: a square or rectangular planar portion; a pair of second insertion segments extending perpendicularly from the planar portion respectively along a pair of side edges of one of surfaces of the planar portion; a pair of linkage insertion segments extending perpendicularly from the planar portion respectively along the pair of side edges of a surface opposite the surface of the planar portion from which the second insertion segments extend, the pair of linkage insertion segments being inserted in the angular tube section; and a securing member retainer provided between the pair of linkage insertion segments and for retaining the securing member therein.

According to the joining member having this configuration, after the pair of linkage insertion segments are inserted into the angular tube section, the securing member is inserted into the securing slit, and the securing member is retained by the securing member retainer provided between the pair of linkage insertion segments, so that the first joining member and the second joining member can be connected to each other. By joining the second joining member to the first joining member, the pair of second insertion segments extending from the planar portion of the second joining member extend in the Z direction. Then, two or more pairs of the first insertion segments and a pair of the second insertion segments are relatively fitted to ends of tubular members, so that at least two tubular members with their axial direction as the X direction or the Y direction can be connected to one tubular member with its axial direction as the Z direction.

In this joining member, the securing member inserted in the securing slit provided in the corresponding side surfaces of the angular tube section is retained by the securing member retainer, so that relative movement of the second joining member in the axial direction of the angular tube section is prevented, and the first joining member and the second joining member are mechanically connected to each other. Accordingly, as compared with the related art in which two joining members are connected to each other by fitting the protrusion into the hole, the connection strength between the first joining member and the second joining member can be enhanced. Specifically, the connection strength between a tubular member with its axial direction as the X direction or the Y direction and a tubular member with its axial direction as the Z direction can be enhanced. Because the connection strength between the first joining member and the second joining member can be enhanced, a welding process for joining the two joining members to each other can be made unnecessary, unlike the related art.

A framework structure according to the present invention is a framework structure constructed by joining tubular members as angular pipes to each other by using a joining member including a first joining member, a second joining member, and a securing member. The first joining member includes: a rectangular-parallelepiped or cubical angular-pipe-like angular tube section; a pair of first insertion segments extending from each of at least two side surfaces of four side surfaces parallel to a Z direction as an axial direction of the angular tube section, the pair of first insertion segments extending in an X direction or a Y direction orthogonal to the Z direction from positions located inward by a predetermined distance relative to a pair of side edges, extending in the Z direction, of each of the at least two side surfaces; and a securing slit that passes in a thickness direction through each of an opposing pair of the side surfaces of the angular tube section and to which the securing member is inserted. The second joining member includes: a square or rectangular planar portion; a pair of second insertion segments extending perpendicularly from the planar portion respectively along a pair of side edges of one of surfaces of the planar portion; a pair of linkage insertion segments extending perpendicularly from the planar portion respectively along the pair of side edges of a surface opposite the surface of the planar portion from which the second insertion segments extend, the pair of linkage insertion segments being inserted in the angular tube section; and a securing member retainer provided between the pair of linkage insertion segments and for retaining the securing member therein. The second joining member is secured to the first joining member as a result of the pair of linkage insertion segments being inserted in the angular tube section and the securing member inserted in the securing slit being retained by the securing member retainer. A plurality of the tubular members are connected to each other as a result of the pair of first insertion segments and the pair of second insertion segments being inserted into ends of the tubular members that are different from each other.

This is the configuration of a three-dimensional-frame-like framework structure constructed by joining tubular members to each other by using the aforementioned joining member including the first joining member, the second joining member, and the securing member. Accordingly, a framework structure with higher connection strength between the tubular members than in the related art can be provided. Because the framework structure is constructed by the engagement between the members, a welding process is not necessary, so that the framework structure can be constructed even in an environment where it is difficult to perform the welding process.

### Advantageous Effects of Invention

Accordingly, the present invention can provide a joining member capable of enhancing the connection strength between tubular members, and a framework structure constructed by joining the tubular members to each other by using the joining member.

### Brief Description of Drawings

[Fig. 1] Fig. 1A is a plan view of an L-shaped first joining member, Fig. 1B is a front view of the L-shaped first joining member, Fig. 1C is a perspective view of the L-shaped first joining member, and Fig. 1D illustrates a method for manufacturing the L-shaped first joining member from a first extrusion-molded body.
[Fig. 2] Fig. 2A is a front view of a second joining member, Fig. 2B is a right side view of the second joining member, Fig. 2C is a perspective view of the second joining member, Fig. 2D illustrates a method for manufacturing the second joining member from a second extrusion-molded body, and Fig. 2E illustrates the method for manufacturing the second joining member continuously from Fig. 2D.
[Fig. 3] Fig. 3A is a front view of a third joining member, Fig. 3B is a right side view of the third joining member, Fig. 3C is a perspective view of the third joining member, Fig. 3D illustrates a method for manufacturing the third joining member from a third extrusion-molded body, and Fig. 3E illustrates the method for manufacturing the third joining member continuously from Fig. 3D.
[Fig. 4] Fig. 4 is a perspective view of a securing member.
[Fig. 5] Fig. 5 is a perspective view of a wedge member.
[Fig. 6] Fig. 6 is an exploded perspective view of a three-dimensional-frame-like framework structure.
[Fig. 7] Fig. 7 is a partially enlarged perspective view of an area indicated by an arrow A in Fig. 6.
[Fig. 8] Fig. 8A is a cross-sectional view taken along a plane orthogonal to a Y direction at the center of an angular tube section in Fig. 7, and Fig. 8B is a cross-sectional view taken along a plane orthogonal to a Z direction at the center of the securing member in Fig. 7.
[Fig. 9] Fig. 9 is an exploded perspective view of components in Fig. 7 in a disassembled state.
[Fig. 10] Fig. 10A is a plan view of a T-shaped first joining member, and Fig. 10B is a perspective view of the T-shaped first joining member.
[Fig. 11] Fig. 11A is a plan view of a cross-shaped first joining member, and Fig. 11B is a perspective view of the cross-shaped first joining member.
[Fig. 12] Fig. 12A is an exploded perspective view of a joining member including one first joining member and two second joining members, Fig. 12B is a perspective view of the joining member and illustrates an assembled state of Fig. 12A, and Fig. 12C is a cross-sectional view taken along a plane orthogonal to the Y direction at the center of the angular tube section of the joining member in Fig. 12B.
[Fig. 13] Fig. 13A is an exploded perspective view of a joining member used in a two-dimensional-frame-like framework structure, Fig. 13B is a perspective view of the joining member and illustrates an assembled state of Fig. 13A, and Fig. 13C is a cross-sectional view taken along a plane orthogonal to the Y direction at the center of the angular tube section of the joining member in Fig. 13B.

### Description of Embodiments

Hereinafter, as specific embodiments of the present invention, multiple types of joining members, a framework structure constructed by using these joining members, and a method for manufacturing these joining members will be described with reference to the drawings.

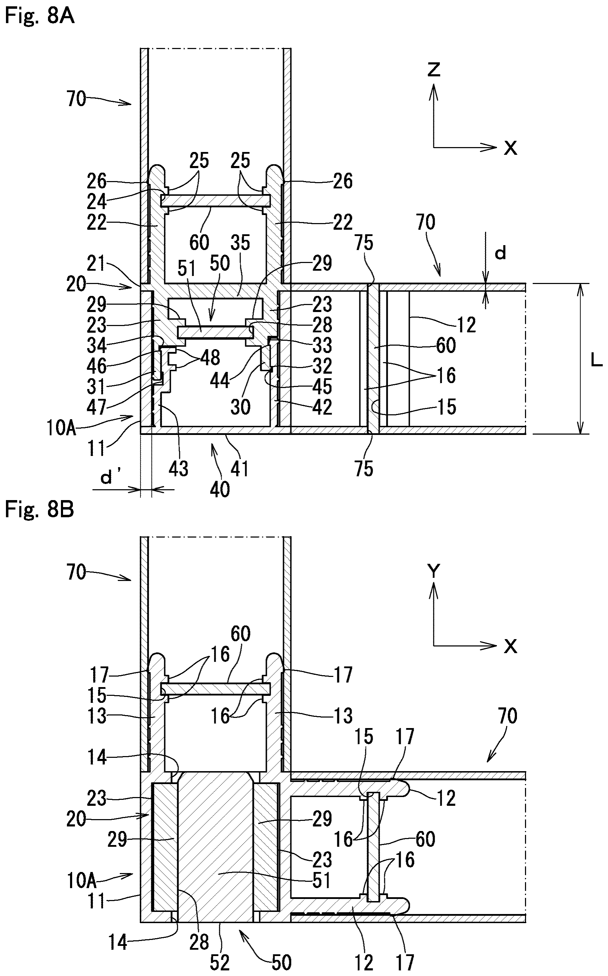

The framework structure according to this embodiment is constructed by joining tubular members 70 to each other by using joining members. Each tubular member 70 is an angular pipe as an extrusion-molded body, and has a square outer shape in cross section (referred to as "orthogonal cross section" hereinafter) orthogonal to an axial direction. The length of each edge of the square as the orthogonal-cross-sectional outer shape will be defined as "L", and the wall thickness of the tubular member 70 will be defined as "d" (see Fig. 8A). Thus, the length of each edge of a square as an orthogonal-cross-sectional inner shape of the tubular member 70 is L - 2d.

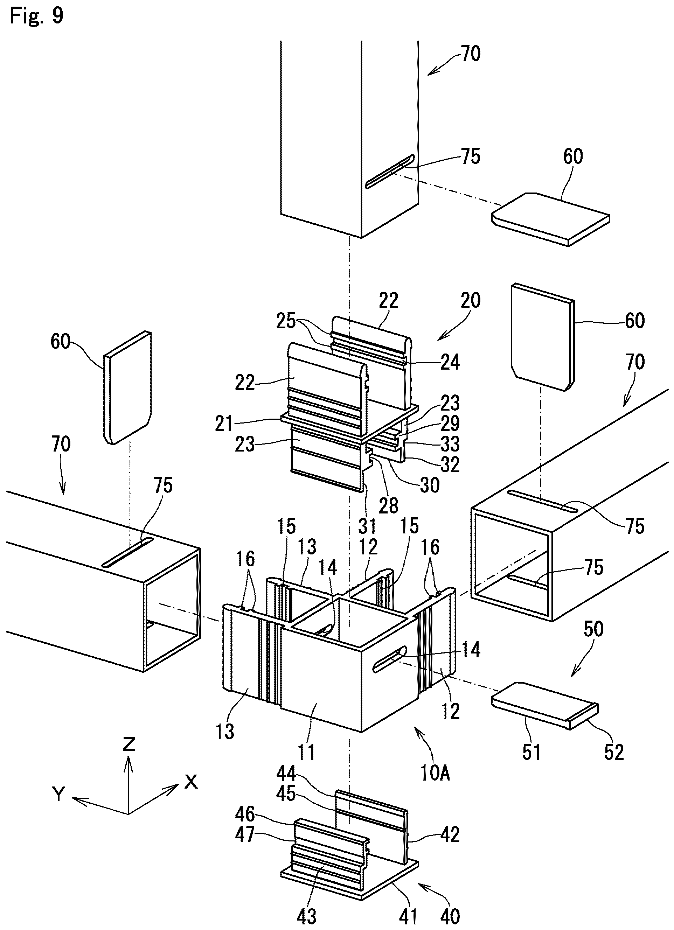

The tubular member 70 includes slits 75 that are located near both of the opposite ends and that extend in a thickness direction through two parallel side surfaces of the four side surfaces (see, for example, Fig. 9). The slits 75 extend in a direction orthogonal to the axial direction of the tubular member 70, but do not pass through the side surfaces in the directions. Each slit 75 is manufactured by performing a drilling process through the tubular member as an extrusion-molded body.

In this embodiment, a first joining member, a second joining member 20, and a third joining member 40 are used as the joining members. Furthermore, for constructing the framework structure, a securing member 50 for securing each first joining member and each second joining member 20 to each other, and a wedge member 60 for reinforcing the joining are used.

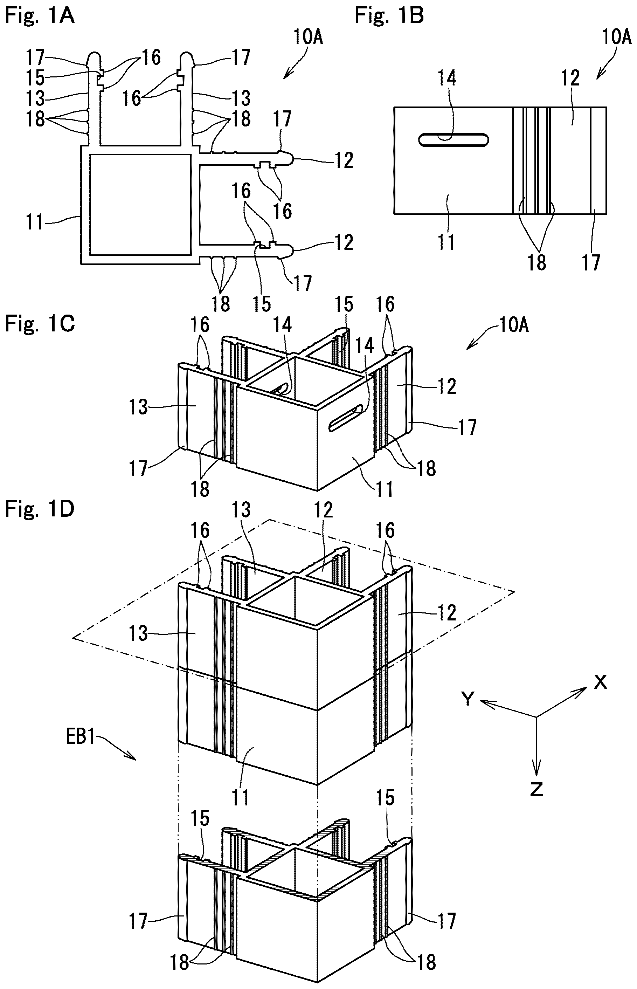

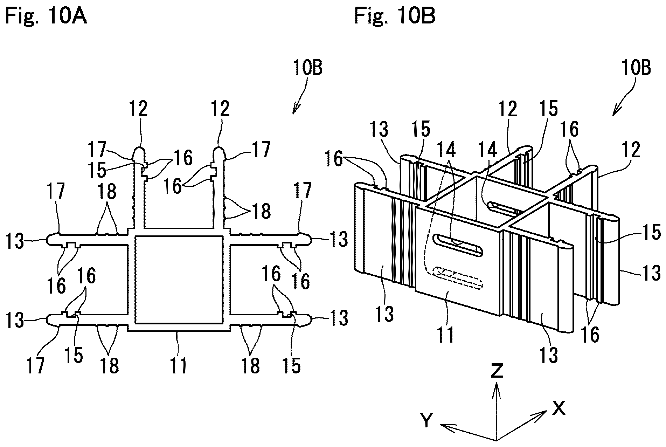

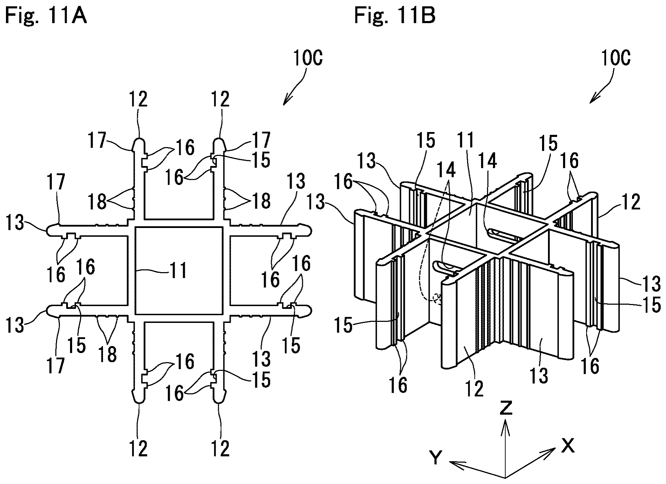

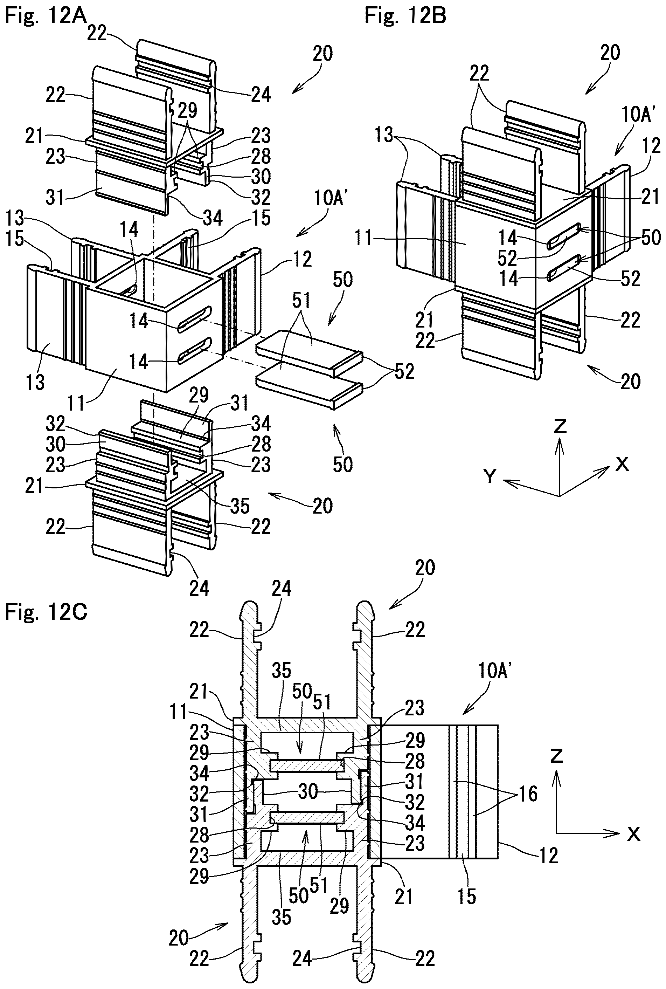

The first joining member in this embodiment includes three types that are referred to as an L-shaped first joining member 10A (see Fig. 1A), a T-shaped first joining member 10B (see Fig. 10A), and a cross-shaped first joining member 10C" (see Fig. 11) when they are to be distinguished from one another, and that are simply collectively referred to as first joining members when they are not to be distinguished from one another. Although details will be described later, the first joining member of any type includes a type in which two parallel side surfaces of an angular tube section 11 are each provided with one securing slit 14 and a type (see Fig. 12A) in which the two parallel side surfaces are each provided with two securing slits 14. Therefore, there are a total of six types of first joining members. When the types having different numbers of securing slits 14 are to be distinguished from each other, the types provided with one securing slit 14 will be given the same reference signs as above, whereas the types provided with two securing slits 14 will be referred to as an L-shaped first joining member 10A', a T-shaped first joining member 10B', and a cross-shaped first joining member 10C'.

The first joining member of any type includes an angular-pipe-like angular tube section 11. In the first joining member, the axial direction of the angular tube section 11 will be referred to as a Z direction, and the two directions orthogonal to the Z direction will respectively be referred to as an X direction and a Y direction.

In addition to the angular tube section 11, the first joining member includes a pair or two pairs of first insertion segments 12, a pair or two pairs of first insertion segments 13, and the securing slits 14. Each of the first insertion segments 12 and 13 is constituted of a pair of members extending in the same direction from one of four side surfaces of the angular tube section 11. The pair of first insertion segments 12 extend in the X direction from the corresponding side surface of the angular tube section 11 from positions located inward by a predetermined distance relative to a pair of side edges extending in the Z direction. The pair of first insertion segments 13 extend in the Y direction from the corresponding side surface of the angular tube section 11 from positions located inward by the predetermined distance relative to a pair of side edges extending in the Z direction. The securing slits 14 extend in the thickness direction through two parallel side surfaces of the angular tube section 11. The L-shaped first joining member 10A includes a pair of the first insertion segments 12 and a pair of the first insertion segments 13. The T-shaped first joining member 10B includes a pair of either of the first insertion segments 12 and the first insertion segments 13 and two pairs of the other. The cross-shaped first joining member 10C includes two pairs of the first insertion segments 12 and two pairs of the first insertion segments 13.

As viewed from the Z direction, the angular tube section 11 of the first joining member has a square outer shape and a square inner shape. The length of each edge of the square outer shape is L. Assuming that the wall thickness of the angular tube section 11 is defined as d' (see Fig. 8A), the length of each edge of the square inner shape is L - 2d'. The wall thickness d' of the angular tube section 11 is larger than the wall thickness d of the tubular member 70. Therefore, the outer shape of the angular tube section 11 as viewed from the Z direction has the same size as the orthogonal-cross-sectional outer shape of the tubular member 70, whereas the inner shape of the angular tube section 11 as viewed from the Z direction is smaller than the orthogonal-cross-sectional inner shape of the tubular member 70.

The pair of first insertion segments 12 and the pair of first insertion segments 13 of the first joining member each extend "from positions located inward by a predetermined distance" relative to the corresponding pair of side edges extending in the Z direction of the angular tube section 11. This "predetermined distance" is set substantially equal to the wall thickness d of the tubular member 70.

The securing slits 14 in the first joining member are long holes that extend along the corresponding side surfaces of the angular tube section 11 and that are long in a direction orthogonal to the Z direction. The securing slits 14 provided in two parallel side surfaces of the angular tube section 11 are provided at identical positions in the Z direction and are provided at positions offset toward one side relative to the center of the angular tube section 11 in the Z direction. The securing member 50 is inserted (fitted) into the securing slits 14. The two securing slits 14 provided in the parallel side surfaces have different widths in the Z direction. One of the widths is equal to the thickness of a flat plate portion 51, to be described later, of the securing member 50, whereas the other width is equal to the thickness of a head 52 of the securing member 50.

The first joining member includes a wedge retainer 15 for retaining the wedge member 60 between counterparts forming a pair in each of the pair of first insertion segments 12 and the pair of first insertion segments 13. Specifically, in the first joining member, the pair of first insertion segments 12 and the pair of first insertion segments 13 each have inner surfaces that face each other and that are each provided with two inner protrusions 16 protruding toward the counterpart. The inner protrusions 16 extend along the entire length of each of the first insertion segments 12 and 13 in the Z direction. The positions of the inner protrusions 16 in the first insertion segments 12 and 13 are set such that the inner protrusions 16 provided on one of the insertion segments of each pair directly face the inner protrusions 16 provided on the other insertion segment of the pair. The inner surface of each of the first insertion segments 12 and 13 is recessed between the two inner protrusions 16 than other areas. The four inner protrusions 16 constitute the wedge retainer 15 serving as a gap for receiving and retaining the wedge member 60 between the pair of first insertion segments 12, as well as between the pair of first insertion segments 13. The distance from the angular tube section 11 to the center of the wedge retainer 15 is equal to the distance from the end of the tubular member 70 to the center of the slit 75.

The first joining member includes an inclined protrusion 17 provided near the distal end of the outer surface of each of the pair of first insertion segments 12 and the pair of first insertion segments 13, and multiple outer protrusions 18 provided at the outer surface of each of the pair of first insertion segments 12 and the pair of first insertion segments 13. The inclined protrusion 17 is inclined outward from the distal end of each of the first insertion segments 12 and 13 toward the angular tube section 11 at the distal side of the outer surface relative to the wedge retainer 15. The multiple outer protrusions 18 protrude outward from the outer surface of each of the first insertion segments 12 and 13 at the angular tube section 11 side relative to the wedge retainer 15. The direction in which the multiple outer protrusions 18 are arranged is the direction in which each of the first insertion segments 12 and 13 extends. The inclined protrusion 17 and the outer protrusions 18 extend along the entire length of each of the first insertion segments 12 and 13 in the Z direction.

The first joining members 10A, 10B, and 10C of the respective types are each manufactured by performing an extrusion-molding step for obtaining a metallic extrusion-molded body, a cutting step for cutting the extrusion-molded body along a plane orthogonal to the extrusion direction, and a removing step for removing a predetermined part from a cut body obtained in the cutting step.

In the L-shaped first joining member 10A, as shown in Fig. 1D, a pair of the first insertion segments 12 extend in the X direction from one of the four side surfaces of the angular tube section 11, and a pair of the first insertion segments 13 extend in the Y direction from a neighboring one of the side surfaces.

The L-shaped first joining member 10A is manufactured by cutting a first extrusion-molded body EB1 (see Fig. 1D), which extends in the Z direction (extrusion direction) while having the shape in the plan view shown in Fig. 1A as a fixed cross-sectional shape, along a plane (XY plane, that is, a plane indicated by a single-dot chain line in Fig. 1D) orthogonal to the Z direction, and subsequently performing a removing step to form the securing slits 14 in the two parallel side surfaces of the angular tube section 11. The cutting step involves performing cutting at a position where the distance in the Z direction from the end of the first extrusion-molded body EB1 is L - 2d.

The second joining member 20 according to this embodiment includes a planar portion 21 that is tabular and square, a pair of second insertion segments 22, and a pair of linkage insertion segments 23. The pair of second insertion segments 22 extend perpendicularly to the planar portion 21 from positions located inward by a predetermined distance relative to a pair of parallel side edges of one of the surfaces of the planar portion 21. The pair of linkage insertion segments 23 extend perpendicularly to the planar portion 21 from positions located inward by a second predetermined distance relative to a pair of side edges of the surface opposite the surface of the planar portion 21 from which the second insertion segments 22 extend.

The planar portion 21 has a length L at each edge of the square outer shape, and has a thickness d that is equal to the wall thickness of the tubular member 70. The pair of second insertion segments 22 are provided at the positions located inward by the predetermined distance relative to the pair of side edges of the planar portion 21. This "predetermined distance" is set substantially equal to the wall thickness d of the tubular member 70, similarly to the "predetermined distance" of the pair of first insertion segments 12 and the pair of first insertion segments 13 of the first joining member. On the other hand, the pair of linkage insertion segments 23 are provided at the positions located inward by the second predetermined distance relative to the pair of side edges of the planar portion 21. This "second predetermined distance" is set substantially equal to the wall thickness d' of the angular tube section 11 of the first joining member. The pair of side edges from which the pair of linkage insertion segments 23 are separated by the second predetermined distance are the same as the pair of side edges from which the pair of second insertion segments 22 are separated by the predetermined distance. The pair of linkage insertion segments 23 extend from the planar portion 21 by different lengths.

Similar to the first insertion segments 12 and 13 of the first joining member, the second joining member 20 includes a wedge retainer 24 for retaining the wedge member 60 between the pair of second insertion segments 22. The wedge retainer 24 of the second joining member 20 is constituted of four inner protrusions 25. The inner protrusions 25 have a configuration similar to that of the inner protrusions 16 constituting the wedge retainer 15 at each of the first insertion segments 12 and 13.

The second joining member 20 includes an inclined protrusion 26 provided near the distal end of the outer surface of each of the pair of second insertion segments 22, and multiple outer protrusions 27 provided at the outer surface of each of the pair of second insertion segments 22. The inclined protrusions 26 and the outer protrusions 27 have configurations similar to those of the inclined protrusions 17 and the outer protrusions 18 of the first joining member.

Furthermore, the second joining member 20 includes a securing member retainer 28 for retaining the securing member 50 between the pair of linkage insertion segments 23. In detail, retaining protrusions 29 protrude toward counterparts from the opposing inner surfaces of the pair of linkage insertion segments 23. The pair of retaining protrusions 29 each have a groove at the distal end surface thereof. The pair of retaining protrusions 29 are provided to directly face each other. In the second joining member 20, the securing member retainer 28 serving as a gap for receiving and retaining the securing member 50 is provided between the grooves at the distal end surfaces of the pair of retaining protrusions 29. The distance from the planar portion 21 to the center of the securing member retainer 28 is equal to the distance from the end of the angular tube section 11 in the Z direction to the center of each securing slit 14.

Of the pair of linkage insertion segments 23, the linkage insertion segment 23 with the shorter extending length from the planar portion 21 has a distal-end part located relative to the retaining protrusion 29 and serving as a first extending portion 30. The linkage insertion segment 23 with the longer extending length from the planar portion 21 has a distal-end part located relative to the retaining protrusion 29 and serving as a second extending portion 31. The outer surface of the first extending portion 30 is located inward relative to an extension surface of the outer surface in the other part of the linkage insertion segment 23 provided with the first extending portion 30. The outer surface of the second extending portion 31 is located on an extension surface of the outer surface in the other part of the linkage insertion segment 23 provided with the second extending portion 31. The distance from the outer surface of the first extending portion 30 to the extension surface of the outer surface in the other part of the linkage insertion segment 23 is equal to the thickness of the second extending portion 31.

The linkage insertion segment 23 having the first extending portion 30 is provided with a lock claw 32 and a first recess 33. The lock claw 32 protrudes outward from the distal end of the first extending portion 30. The first recess 33 is recessed from the outer surface of the linkage insertion segment 23 at the planar portion 21 side relative to the boundary between the retaining protrusion 29 and the first extending portion 30. The first recess 33 is recessed inward relative to the outer surface of the first extending portion 30, and a first claw 44 of the third joining member 40, to be described later, is locked to the first recess 33.

The linkage insertion segment 23 having the second extending portion 31 is provided with a second recess 34. The second recess 34 is recessed from the inner surface at the second extending portion 31 side relative to the boundary between the retaining protrusion 29 and the second extending portion 31. The lock claw 32 or a second claw 46 of the third joining member 40, to be described later, is locked to the second recess 34.

Furthermore, the second joining member 20 includes a base 35 and multiple protrusions 36. The base 35 is tabular, is in contact with the planar portion 21, and connects the pair of linkage insertion segments 23 to each other. The protrusions 36 are provided on the outer surfaces of the pair of linkage insertion segments 23. The base 35 reinforces the planar portion 21 and the base ends of the pair of linkage insertion segments 23. Each of the multiple protrusions 36 protrudes linearly in a direction orthogonal to the direction in which the corresponding linkage insertion segment 23 extends from the planar portion 21. The direction in which the protrusions 36 are arranged is the direction in which the linkage insertion segments 23 extend. The protrusions 36 are not provided on the outer surface of the first extending portion 30.

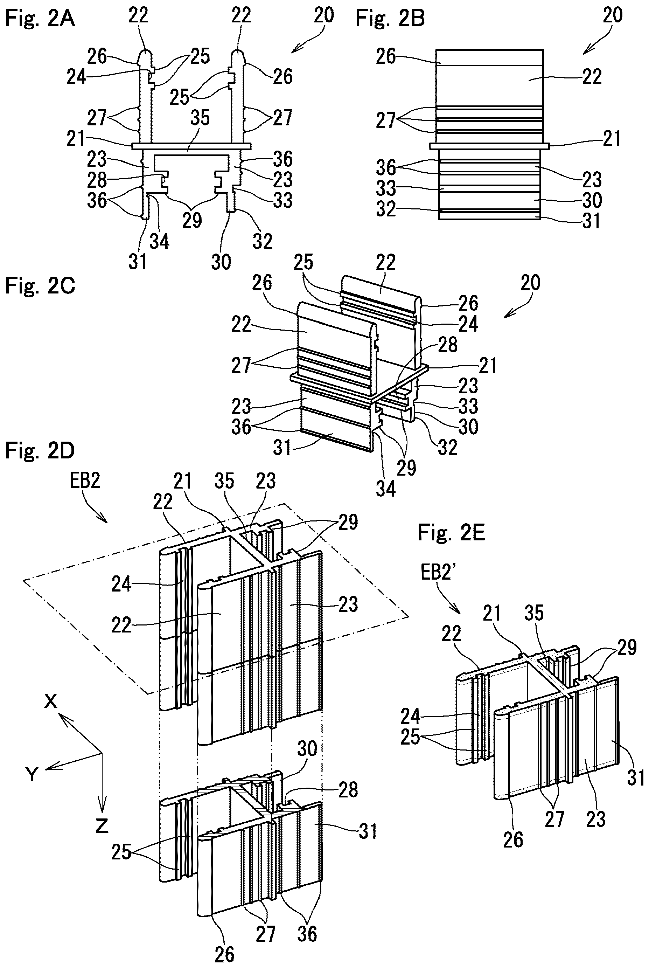

Similar to the first joining member, the second joining member 20 is manufactured from a metallic extrusion-molded body. In the second joining member 20, a direction parallel to the planar portion 21 and orthogonal to the direction in which the pair of second insertion segments 22 are separated from each other will be defined as the Z direction as the extrusion direction. A direction orthogonal to the Z direction and parallel to the planar portion 21 will be defined as the X direction. A direction orthogonal to the Z direction and perpendicular to the planar portion 21 will be defined as the Y direction (see Fig. 2D).

The second joining member 20 is manufactured by performing an extrusion-molding step for forming a second extrusion-molded body EB2 (see Fig. 2D), which extends in the extrusion direction (Z direction) while having the outer shape shown in the front view in Fig. 2A as a fixed cross-sectional shape, a cutting step for cutting the second extrusion-molded body EB2 along a plane (XY plane) orthogonal to the Z direction, and a removing step for removing a predetermined part of a cut body EB2' obtained in the cutting step.

The cutting step involves performing cutting at a position of the distance L in the Z direction from the end of the second extrusion-molded body EB2. The removing step involves removing predetermined regions (shaded regions in Fig. 2E), excluding the planar portion 21, at opposite ends of the cut body EB2' in the Z direction. In detail, for the pair of second insertion segments 22, the regions from the opposite ends thereof in the Z direction to the distance d are removed. For the pair of linkage insertion segments 23 and the base 35, the regions from the opposite ends thereof in the Z direction to the distance d' are removed.

Accordingly, the outer shape of the planar portion 21 becomes a square with each edge having the length L. The length of the pair of second insertion segments 22 in the Z direction becomes L - 2d, which is the length to be fitted to the end of the tubular member 70. Moreover, the length of the pair of linkage insertion segments 23 and the base 35 in the Z direction becomes L - 2d', which is the length to be fitted into the angular tube section 11 of the first joining member.

The third joining member 40 according to this embodiment includes a flat plate portion 41 having a square outer shape, and a first retaining segment 42 and a second retaining segment 43 extending from the flat plate portion 41. The first retaining segment 42 and the second retaining segment 43 extend perpendicularly to the flat plate portion 41 from positions located inward by a second predetermined distance relative to a pair of parallel side edges of one of the surfaces of the flat plate portion 41. The flat plate portion 41 has a length L at each edge of the square outer shape, and has a thickness d that is equal to the wall thickness of the tubular member 70.

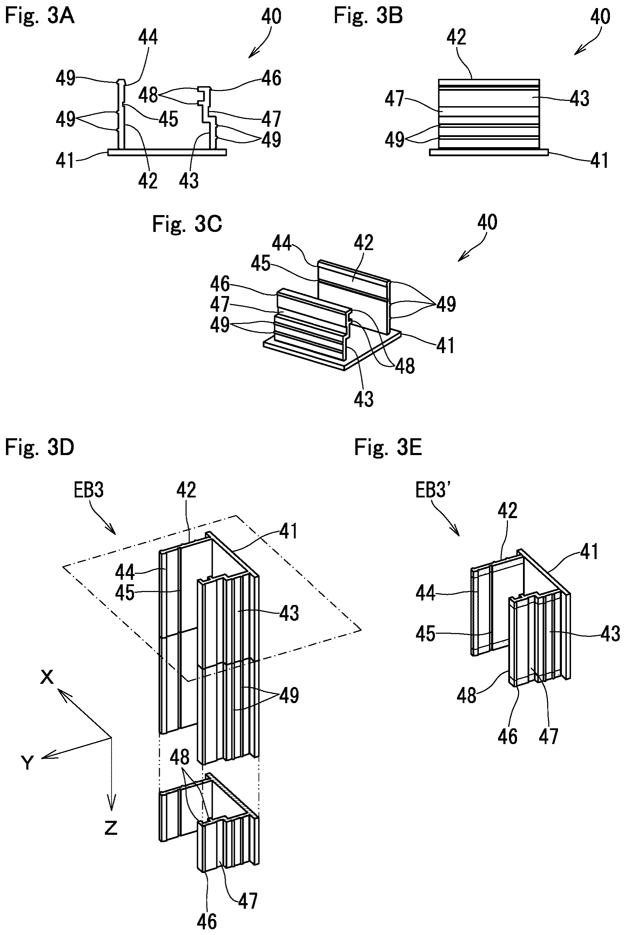

Similar to the case of the pair of linkage insertion segments 23 of the second joining member 20, the "second predetermined distance" between each of the first retaining segment 42 and the second retaining segment 43 and the corresponding side edge of the flat plate portion 41 is set substantially equal to the wall thickness d' of the angular tube section 11 of the first joining member. As shown in Fig. 3A, the first retaining segment 42 extends linearly from the flat plate portion 41. On the other hand, the second retaining segment 43 entirely has a cranked shape such that the second retaining segment 43 extends linearly from the flat plate portion 41 to a position located at about half the length of the first retaining segment 42, bends toward the first retaining segment 42 at that position, and subsequently extends parallel to the first retaining segment 42 to the distal end toward the opposite side of the flat plate portion 41. With the bent area of the second retaining segment 43 as the boundary, the distance between the extension surface of the outer surface at the flat plate portion 41 side and the outer surface at the distal side is substantially equal to the wall thickness of the first retaining segment 42. The length from the flat plate portion 41 to the distal end of the first retaining segment 42 is greater than the length from the flat plate portion 41 to the distal end of the second retaining segment 43.

The first retaining segment 42 is provided with a first claw 44 protruding from the distal end toward the second retaining segment 43, and is also provided with a first groove 45 recessed in the inner surface facing the second retaining segment 43. The first groove 45 is provided at the distal end side relative to the center in the extending direction of the first retaining segment 42. The first claw 44 and the first groove 45 extend orthogonally to the extending direction of the first retaining segment 42 from the flat plate portion 41, and also extend along the entire length of the first retaining segment 42 in a direction orthogonal to the direction in which the first retaining segment 42 and the second retaining segment 43 are separated from each other.

The second retaining segment 43 is provided with a second claw 46, a second groove 47, and two inner protrusions 48. The second claw 46 protrudes toward the opposite side of the first retaining segment 42 from the distal end of the second retaining segment 43. In the area where the second retaining segment 43 bends in a cranked fashion toward the first retaining segment 42, the second groove 47 is recessed from the outer surface at the opposite side of the first retaining segment 42. The two inner protrusions 48 protrude toward the first retaining segment 42 near the distal end of the second retaining segment 43, and are separated from each other in the extending direction of the second retaining segment 43. The distance from the flat plate portion 41 to the center between the two inner protrusions 48 is a distance that is half the length of the angular tube section 11 of the first joining member in the Z direction. The second claw 46, the second groove 47, and the inner protrusions 48 extend along the entire length of the second retaining segment 43. The extending direction thereof is orthogonal to the direction in which the second retaining segment 43 extends from the flat plate portion 41, and is also orthogonal to the direction in which the first retaining segment 42 and the second retaining segment 43 are separated from each other.

The first claw 44 of the third joining member 40 is locked to the first recess 33 of the second joining member 20 or to the second groove 47 of another third joining member 40. The lock claw 32 of the second joining member 20 or the second claw 46 of another third joining member 40 is locked to the first groove 45. The second claw 46 is locked to the second recess 34 of the second joining member 20 or the first groove 45 of another third joining member 40. The first claw 44 of another third joining member 40 is locked to the second groove 47.

The third joining member 40 includes multiple protrusions 49 on the outer surface of each of the first retaining segment 42 and the second retaining segment 43. The multiple protrusions 49 extend linearly in the same direction as the second claw 46, the second groove 47, and the inner protrusions 48. The direction in which the multiple protrusions 49 are arranged is the direction in which the first retaining segment 42 and the second retaining segment 43 extend. In the second retaining segment 43, the protrusions 49 are not provided toward the distal end relative to the cranked area.

Similar to the first joining member and the second joining member 20, the third joining member 40 is also manufactured from a metallic extrusion-molded body. In the third joining member 40, a direction parallel to the flat plate portion 41 and orthogonal to the direction in which the first retaining segment 42 and the second retaining segment 43 are separated from each other will be defined as the Z direction as the extrusion direction. A direction orthogonal to the Z direction and parallel to the flat plate portion 41 will be defined as the X direction. A direction orthogonal to the Z direction and perpendicular to the flat plate portion 41 will be defined as the Y direction (see Fig. 3D).

The third joining member 40 is manufactured by performing an extrusion-molding step for forming a third extrusion-molded body EB3 (see Fig. 3D), which extends in the extrusion direction (Z direction) while having the outer shape shown in the front view in Fig. 3A as a fixed cross-sectional shape, a cutting step for cutting the third extrusion-molded body EB3 along a plane (XY plane) orthogonal to the Z direction, and a removing step for removing a predetermined part of a cut body EB3' obtained in the cutting step.

The cutting step involves performing cutting at a position of the distance L in the Z direction from the end of the third extrusion-molded body EB3. The removing step involves removing parts, excluding the flat plate portion 41, at opposite ends of the cut body EB3' in the Z direction. In detail, in each of the first retaining segment 42 and the second retaining segment 43, the regions (i.e., shaded regions in Fig. 3E) from the opposite ends thereof in the Z direction to the distance d' are removed.

Accordingly, the outer shape of the flat plate portion 41 becomes a square with each edge having the length L. The length, in the Z direction, of each of the first retaining segment 42 and the second retaining segment 43 excluding the flat plate portion 41 becomes L - 2d', which is the length to be fitted into the angular tube section 11 of the first joining member.

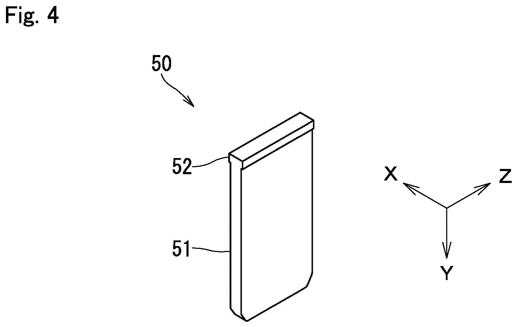

As shown in Fig. 4, the securing member 50 includes a flat plate portion 51 that has a rectangular outer shape and that is tabular, and also includes a head 52 provided along one of short edges of the flat plate portion 51. With regard to the flat plate portion 51, the opposite ends of the short edge opposite the head 52 are chamfered such that the flat plate portion 51 is tapered toward the short edge. The head 52 has a larger wall thickness than that of the flat plate portion 51.

In the securing member 50, the length in the direction in which the long edges of the flat plate portion 51 extend is equal to the length L of each edge of the square outer shape when the angular tube section 11 of the first joining member is viewed from the Z direction. The length of each short edge of the flat plate portion 51 (i.e., the length of the non-tapered part) is equal to the length of each securing slit 14 in the first joining member. The length of each short edge of the flat plate portion 51 is equal to the distance between the securing member retainers 28 facing each other in the second joining member 20. Furthermore, the thickness of the flat plate portion 51 is equal to the width of each securing slit 14 in the Z direction. The thickness of the flat plate portion 51 is equal to the width of the groove (i.e., the distance between two sidewalls constituting the groove) in the securing member retainer 28 of the second joining member 20.

Similar to the first joining member and the second joining member 20, the securing member 50 is also manufactured from a metallic extrusion-molded body. The direction in which the short edges of the flat plate portion 51 extend will be defined as the Z direction, the thickness direction of the flat plate portion 51 will be defined as the X direction, and the direction in which the long edges of the flat plate portion 51 extend will be defined as the Y direction. The securing member 50 is manufactured by performing an extrusion-molding step for forming an extrusion-molded body with the Z direction as the extrusion direction, a cutting step for cutting the extrusion-molded body along a plane (XY plane) orthogonal to the Z direction, and a removing step (in this case, chamfering) for removing a predetermined part of a cut body obtained in the cutting step.

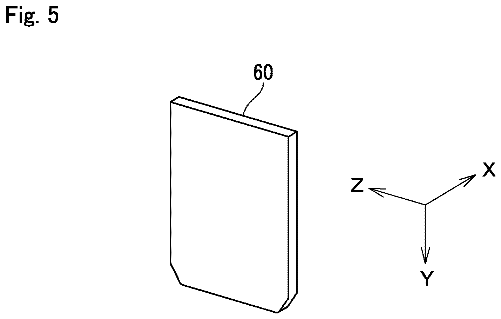

As shown in Fig. 5, the wedge member 60 has a rectangular outer shape and is tabular. With regard to the wedge member 60, the opposite ends of one of the two short edges are chamfered such that the wedge member 60 is tapered toward the short edge. In the wedge member 60, the length in the direction in which the long edges extend is equal to the length L of each edge of the square as the orthogonal-cross-sectional outer shape of the tubular member 70. The length of each short edge of the wedge member 60 (i.e., the length of the non-tapered part) is equal to the length of each slit 75 in the tubular member 70. The length of each short edge of the wedge member 60 is equal to the distance between the pair of wedge retainers 15 in each of the pair of first insertion segments 12 and the pair of first insertion segments 13. The thickness of the wedge member 60 is equal to the width of each slit 75 (i.e., the length of the tubular member 70 in the longitudinal direction). The thickness of the wedge member 60 is equal to the distance between the two inner protrusions 16 provided on each of the first insertion segments 12 and 13.

Similar to the first joining member and the second joining member 20, the wedge member 60 is also manufactured from a metallic extrusion-molded body. The direction in which the short edges of the wedge member 60 extend will be defined as the Z direction, the thickness direction thereof will be defined as the X direction, and the direction in which the long edges thereof extend will be defined as the Y direction. The wedge member 60 is manufactured by performing an extrusion-molding step for forming an extrusion-molded body with the Z direction as the extrusion direction, a cutting step for cutting the extrusion-molded body along a plane (XY plane) orthogonal to the Z direction, and a removing step (in this case, chamfering) for removing a predetermined part of a cut body obtained in the cutting step.

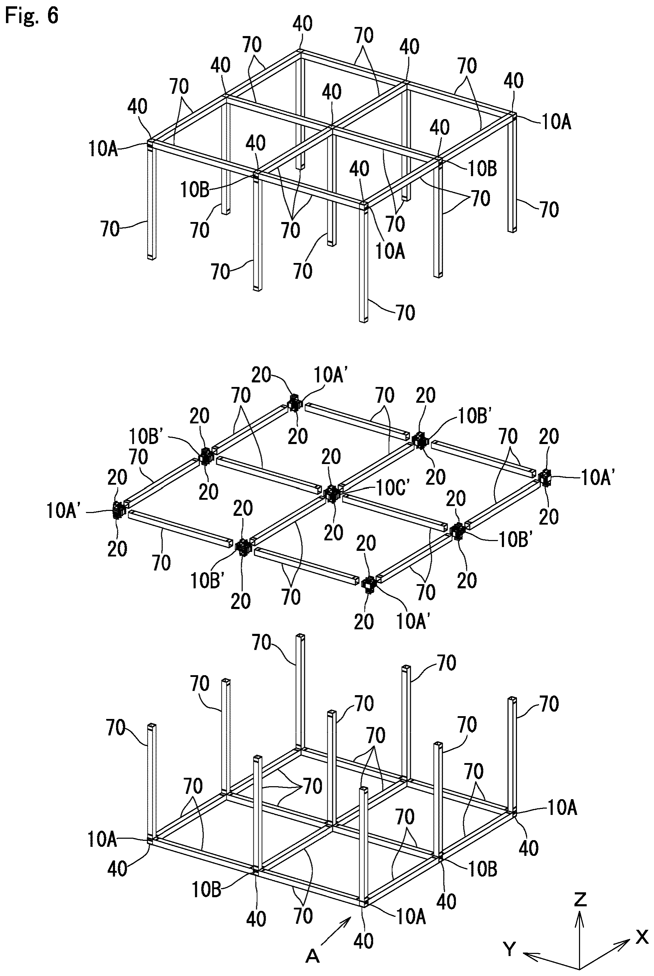

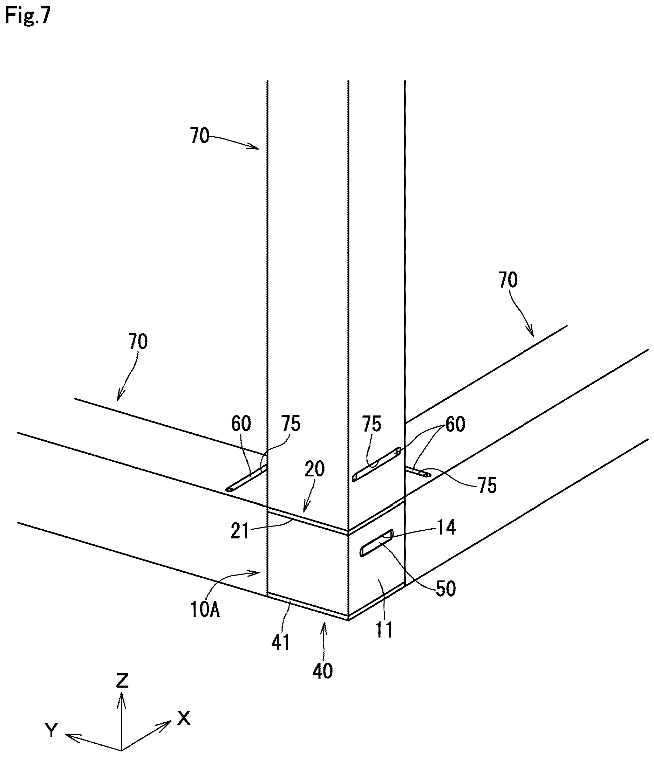

Next, the construction of a three-dimensional-frame-like framework structure using the above-described components will be described by mainly using Fig. 6 to Fig. 12C. First, in the three-dimensional-frame-like framework structure shown in Fig. 6, the construction of a corner area (see Fig. 7) where each tubular member 70 is connected in only one direction with respect to each of the X direction, the Y direction, and the Z direction with reference to the angular tube section 11 of the first joining member will be described. When this corner area is to be constructed, tubular members 70, an L-shaped first joining member 10A, a second joining member 20, a third joining member 40, a securing member 50, and wedge members 60 are used. When the framework structure is to be constructed, the construction process can be performed readily by using the first joining member oriented such that the Z direction (extrusion direction) thereof is aligned with the height direction.

First, the first joining member 10A having one securing slit 14 and the second joining member 20 are connected to each other. In detail, in a state where the first joining member 10A is oriented such that the securing slit 14 is positioned higher than the center of the angular tube section 11 in the height direction, the pair of linkage insertion segments 23 of the second joining member 20 are inserted into the angular tube section 11 from above, so as to bring the planar portion 21 into abutment with the angular tube section 11. In this state, the direction in which the pair of linkage insertion segments 23 are separated from each other is aligned with the extending direction of the securing slit 14.

Subsequently, the securing member 50 is inserted into the securing slit 14 in the angular tube section 11, starting from the short edge opposite the head 52. Since the securing member retainer 28 provided at the pair of linkage insertion segments 23 and the securing slit 14 correspond with each other to have the positional relationship described above, the flat plate portion 51 of the securing member 50 is fitted and retained between the pair of grooves of the securing member retainer 28, as shown in Fig. 8A. With the flat plate portion 51 being fitted between the pair of grooves of the securing member retainer 28, the pair of linkage insertion segments 23 are pressed away from each other, so that the multiple protrusions 36 provided on the outer surfaces of the pair of linkage insertion segments 23 press against the inner surfaces of the angular tube section 11. As mentioned above, the length of the securing member 50 in the longitudinal direction is equal to the length L of each edge of the square outer shape of the angular tube section 11, so that the opposite longitudinal ends of the securing member 50 are inserted in the securing slit 14, as shown in Fig. 8B. Therefore, with the frictional resistance between the inner surfaces of the angular tube section 11 and the multiple protrusions 36 and the mechanical linkage between the securing slit 14 and the securing member 50, the second joining member 20 is prevented from pulling out of the first joining member 10A.

As described above, when the second joining member 20 is connected to the first joining member 10A, the pair of second insertion segments 22 of the second joining member 20 extend in the Z direction (in this case, upward). In the state where the second joining member 20 is inserted in the angular tube section 11, a gap capable of receiving the second extending portion 31 or the first retaining segment 42 is formed between the corresponding inner surface of the angular tube section 11 and the outer surface of the first extending portion 30.

Subsequently, the third joining member 40 is connected to the angular tube section 11. In detail, the first retaining segment 42 and the second retaining segment 43 of the third joining member 40 are inserted into the angular tube section 11 from below, so as to bring the flat plate portion 41 into abutment with the angular tube section 11. In this state, since the second joining member 20 is already connected to the angular tube section 11, the first extending portion 30 and the first retaining segment 42 are set to face each other, and the second extending portion 31 and the second retaining segment 43 are set to face each other.

In the third joining member 40, when the first retaining segment 42 and the second retaining segment 43 are inserted into the angular tube section 11, the outer surface of the first retaining segment 42 and the outer surface at the flat plate portion 41 side relative to the cranked area of the second retaining segment 43 respectively come into contact with the inner surfaces of the angular tube section 11, and a gap capable of receiving the second extending portion 31 or the first retaining segment 42 is formed between the outer surface at the distal side relative to the cranked area of the second retaining segment 43 and the corresponding inner surface of the angular tube section 11. The second joining member 20 and the third joining member 40 correspond with each other to have respective positional relationships between the lock claw 32 and the first groove 45, between the first recess 33 and the first claw 44, and between the second recess 34 and the second claw 46. Therefore, when the third joining member 40 is connected to the angular tube section 11, the lock claw 32 becomes locked to the first groove 45, the first claw 44 becomes locked to the first recess 33, and the second claw 46 becomes locked to the second recess 34, whereby the third joining member 40 is prevented from pulling out of the angular tube section 11.

In the state where the second joining member 20 and the third joining member 40 are connected to the angular tube section 11, the four side surfaces of the angular tube section 11, the planar portion 21, and the flat plate portion 41 constitute a cube with each edge having the length L.

Subsequently, the end of each tubular member 70 is externally fitted to the corresponding one of the pair of first insertion segments 12, the pair of first insertion segments 13, and the pair of second insertion segments 22, thereby joining the tubular members 70 respectively to the first joining member 10A and the second joining member 20. The following description relates to the pair of first insertion segments 12 as an example. The distal ends of the first insertion segments 12 have the inclined protrusions 17 protruding toward the angular tube section 11. Because the inclined protrusions 17 are inclined outward from the distal ends of the first insertion segments 12, the first insertion segments 12 are guided to be relatively fitted into the corresponding tubular member 70.

When the tubular member 70 is fitted to the pair of first insertion segments 12, the end of the tubular member 70 comes into abutment with the angular tube section 11. In this state, each side surface of the cube constituted by the side surfaces of the angular tube section 11, the planar portion 21, and the flat plate portion 41 is flush with the corresponding side surface of the tubular member 70, thereby achieving a favorable external appearance with no steps therebetween. Furthermore, since there are no steps between the joining members and the tubular members 70, there is no possibility of unstable installation of the constructed framework structure on an installation surface or rattling thereof.

Once each tubular member 70 is fitted to the pair of first insertion segments 12, the wedge member 60 is inserted into the slits 75 provided near the end of the tubular member 70. The wedge retainers 15 provided at the pair of first insertion segments 12 and the slits 75 correspond with each other to have the positional relationship described above. Therefore, as shown in Fig. 8B, the tabular wedge member 60 is retained between the pair of wedge retainers 15 providing a gap between the two inner protrusions 16. As mentioned above, since the length of the wedge member 60 in the longitudinal direction is equal to the length L of each edge of the square outer shape of the tubular member 70, the opposite longitudinal ends of the wedge member 60 are respectively fitted in the slits 75, as shown in Fig. 8A. Thus, when an external force acts on the tubular member 70 in which the first insertion segments 12 of the first joining member 10A is fitted, a possibility of the first insertion segments 12 becoming distorted or buckling is prevented by the wedge member 60.

Accordingly, the tubular member 70 with its axial direction as the X direction can be connected to the first joining member 10A. With regard to each of the remaining pair of first insertion segments 13 and the remaining pair of second insertion segments 22, the end of the corresponding tubular member 70 is externally fitted thereto, similarly to the above, and the wedge member 60 is inserted into the slits 75 in the tubular member 70. Accordingly, the tubular member 70 with its axial direction as the Y direction and the tubular member 70 with its axial direction as the Z direction are connected to the first joining member 10A. Specifically, by using one L-shaped first joining member 10A and one second joining member 20, one tubular member 70 with its axial direction as the X direction, one tubular member 70 with its axial direction as the Y direction, and one tubular member 70 with its axial direction as the Z direction can be connected to one another, whereby the corner area of the three-dimensional-frame-like framework structure can be constructed.

In the construction of the three-dimensional-frame-like framework structure, for example, the T-shaped first joining member 10B, as shown in Fig. 10A and Fig. 10B, is used together with the second joining member 20, so that one tubular member 70 with its axial direction as the X direction, two tubular members 70 with their axial direction as the Y direction, and one tubular member 70 with its axial direction as the Z direction can be connected to one another. Furthermore, the cross-shaped first joining member 10C, as shown in Fig. 11A and Fig. 11B, is used together with the second joining member 20, so that two tubular members 70 with their axial direction as the X direction, two tubular members 70 with their axial direction as the Y direction, and one tubular member 70 with its axial direction as the Z direction can be connected to one another.

By combining each of the L-shaped first joining member 10A, the T-shaped first joining member 10B, and the cross-shaped first joining member 10C with one second joining member 20, an upper structure (see the upper part in Fig. 6) and a lower structure (see the lower part in Fig. 6) of the three-dimensional-frame-like framework structure can be constructed.

The structure of an area (see the middle part in Fig. 6) where two tubular members 70 with their axial direction as the Z direction are connected from above and below in the three-dimensional-frame-like framework structure will now be described mainly with reference to Fig. 12A to Fig. 12C. Fig. 12A to Fig. 12C illustrate the L-shaped first joining member 10A' as an example. In this first joining member 10A', a pair of parallel side surfaces of the angular tube section 11 are each provided with two securing slits 14 that are separated from each other in the Z direction. The two securing slits 14 are symmetrically provided with respect to the center of the angular tube section 11 in the Z direction as the boundary. Other components in the first joining member 10A' are the same as those of the first joining member 10A, and the description about the connection of the tubular members 70 in the X direction and the Y direction will be omitted.

The first joining member 10A' can allow second joining members 20 to be respectively connected to opposite sides of the angular tube section 11 in the Z direction. In detail, the pair of linkage insertion segments 23 of one second joining member 20 are inserted from above into the angular tube section 11 of the first joining member 10A', and the pair of linkage insertion segments 23 of another second joining member 20 are inserted from below into the angular tube section 11 of the first joining member 10A'. Because the first extending portion 30 and the second extending portion 31 of each second joining member 20 have shapes corresponding with each other, as described above, the second extending portion 31 of the other second joining member 20 is inserted between the first extending portion 30 of the one second joining member 20 and the corresponding inner surface of the angular tube section 11, and the lock claw 32 provided at the distal end of the first extending portion 30 of the one second joining member 20 is locked to the second recess 34 in the other second joining member 20 (see Fig. 12C). With the lock claw 32 being locked to the second recess 34, the two second joining members 20 are prevented from pulling out of the angular tube section 11.

When the respective pairs of linkage insertion segments 23 of the second joining members 20 are inserted from above and below into the angular tube section 11, the securing members 50 are inserted into the two securing slits 14 separated from each other in the vertical direction (Z direction). Accordingly, in accordance with reasons similar to the above, the two second joining members 20 are connected to the first joining member 10A', and the respective pairs of second insertion segments 22 extend upward and downward from the angular tube section 11 (see Fig. 12B). Subsequently, the respective ends of the tubular members 70 are externally fitted to the pair of second insertion segments 22 extending upward from the angular tube section 11 and the pair of second insertion segments 22 extending downward therefrom, and the wedge members 60 are then inserted into the slits 75 near the respective ends of the tubular members 70. Accordingly, the two tubular members 70 with their axial direction as the Z direction can be connected to the first joining member 10A'.

Each T-shaped first joining member 10B and each cross-shaped first joining member 10C can be turned into a first joining member 10B' and a first joining member 10C', respectively, by being provided with securing slits 14 in areas indicated by dashed lines in Fig. 10B and Fig. 11B. Accordingly, two tubular members 70 with their axial direction as the Z direction can be connected to each of the first joining member 10B' and the first joining member 10C'.

With regard to the joining members for joining multiple tubular members 70 to each other, the type of first joining member used corresponds with the directions and the number of tubular members 70 to be connected, so that the three-dimensional-frame-like framework structure, as shown in Fig. 6, can be constructed.

With regard to the joining members according to this embodiment, a two-dimensional-frame-like framework structure parallel to the XY plane can also be constructed by joining tubular members 70 to the first joining member alone without joining second joining members 20 to the first joining member. In this case, two third joining members 40 are connected to the first joining member.

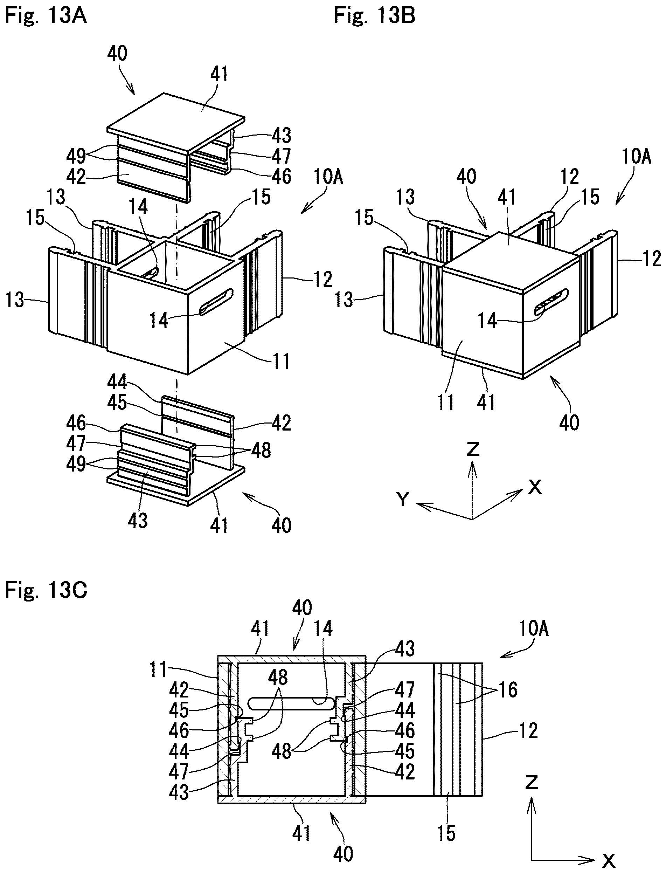

In detail, as shown in Fig. 13A to Fig. 13(c), with regard to the first joining member 10A in which the axial direction of the angular tube section 11 is aligned with the vertical direction, the first retaining segment 42 and the second retaining segment 43 of a third joining member 40 is inserted from above into the angular tube section 11, and the first retaining segment 42 and the second retaining segment 43 of another third joining member 40 is inserted from below into the angular tube section 11, thereby bringing the respective planar portions 41 into abutment with the angular tube section 11. Accordingly, the four side surfaces of the angular tube section 11, the flat plate portion 41 of the upper third joining member 40, and the flat plate portion 41 of the lower third joining member 40 constitute a cube with each edge having the length L (see Fig. 13B). By joining the tubular members 70 to the first joining member 10A in this state, the side surfaces of the aforementioned cube become flush with the corresponding side surfaces of the tubular members 70, thereby achieving a favorable external appearance with no steps therebetween. Furthermore, since there are no steps between the joining members and the tubular members 70, there is no possibility of unstable installation of the constructed framework structure on an installation surface or rattling thereof.

Because the first retaining segment 42 and the second retaining segment 43 of each third joining member 40 have shapes corresponding with each other, as described above, the first retaining segment 42 of one of the third joining members 40 is inserted between the outer surface at the distal side relative to the cranked area of the second retaining segment 43 of the other third joining member 40 and the corresponding inner surface of the angular tube section 11. Moreover, the first claw 44 at the distal end of the first retaining segment 42 of the one third joining member 40 is locked to the second groove 47 in the other third joining member 40, and the second claw 46 at the distal end of the second retaining segment 43 of the one third joining member 40 is locked to the first groove 45 in the other third joining member 40 (see Fig. 13(c)). With the engagement between the first claw 44 and the second groove 47 and the engagement between the second claw 46 and the first groove 45, the two third joining members 40 are prevented from pulling out of the angular tube section 11.

The openings of the securing slits 14 in each first joining member may be filled in by inserting the securing members 50 into the securing slits 14.

With the types of first joining members used corresponding with the directions and the number of tubular members 70 to be connected, various two-dimensional-frame-like framework structures can be constructed.

The two-dimensional-frame-like or three-dimensional-frame-like framework structure constructed in this manner can be used for various application purposes, such as a framework for a pedestal, a temporary building, or a greenhouse, a frame for a signboard or a signpost, and a trolley. Although the application purposes are not particularly limited, suitable applications include those that require high mechanical strength or high stability with no distortion and no rattling.

Accordingly, in this embodiment, when the second joining member 20 is connected to the first joining member and the securing member 50 is inserted into the securing slit 14, the securing member 50 is retained by the securing member retainer 28, so that relative movement of the second joining member 20 in the axial direction of the angular tube section 11 is prevented. Accordingly, as compared with the related art, the connection strength between the first joining member and the second joining member 20 can be enhanced, and the connection strength between a tubular member 70 with its axial direction as the X direction or the Y direction and a tubular member 70 with its axial direction as the Z direction can be enhanced. Consequently, a framework structure with enhanced connection strength between the tubular members 70 can be provided.

In a created sample, the length L of each edge of the square outer shape of the tubular member 70 is set to 40 mm, the wall thickness d of the tubular member 70 is set to 2 mm, the joining members and the tubular member 70 are composed of an aluminum alloy for wrought products, and the tubular member 70 is connected to the first joining member with the second joining member 20 interposed therebetween. In a state where the angular tube section 11 of the sample is fixed, a cantilever-bending test is performed. The cantilever-bending test involves applying a load in the X direction or the Y direction onto a point of the tubular member 70 extending in the Z direction from the angular tube section 11 to a predetermined position (in this case, 80 mm). As a result, a maximum load until buckling occurs is 3872 N in the X direction and 4607 N in the Y direction, whereby it is confirmed that sufficient connection strength is obtained.

With the insertion of the pair of second insertion segments 22, the first joining member and the second joining member 20 can be connected to have high connection strength, so that a process for welding them together can be made unnecessary. Because the welding process is not necessary, as mentioned above, a framework structure can be constructed even in an environment where it is difficult to perform the welding process. Although it is not necessary to perform welding for constructing the framework structure according to this embodiment, this does not imply that welding is to be excluded.

Furthermore, in this embodiment, all of the members, such as the first joining members (L-shaped first joining members 10A, T-shaped first joining members 10B, and cross-shaped first joining members 10C), the second joining members 20, the third joining members 40, the securing members 50, and the wedge members 60, used for joining tubular members 70 to each other are manufactured by extrusion molding, similarly to the tubular members 70. Therefore, all of the components of the framework structure can be composed of a metallic material having the same composition. For example, all of the components of the framework structure may be composed of an aluminum alloy for wrought products. Accordingly, the problem in the related art where distortion occurs in the framework structure due to different thermal expansion coefficients among the members can be resolved.

When members are to be welded to each other, the composition of the welded area becomes different from the composition of the members, possibly causing distortion to occur in the framework structure due to different thermal expansion coefficients. As mentioned above, this embodiment does not require a welding process, so that there is no possibility of distortion occurring due to welding of the framework structure.

As mentioned above, all of the components of the framework structure can be composed of a metallic material having the same composition, so that a sorting process at the time of disposal is not necessary, and a process for reusing the materials is also simplified.

In addition, in this embodiment, the framework structure is constructed by the engagement between the members, so that screws and bolts are not used whatsoever. Thus, electrolytic corrosion is effectively prevented.

Although the present invention has been described above with reference to preferred embodiments, the present invention is not limited to the above embodiments and permits various modifications and design changes, as indicated below, so long as they do not depart from the scope of the invention.

For example, in the above description, the orthogonal-cross-sectional outer shape of each tubular member 70 is square, and the outer shape of the angular tube section 11 of the first joining member as viewed from the Z direction is also square with the same size. This is advantageous in that the tubular members 70 of the same type can be used as the tubular members 70 to be connected in the X direction, the Y direction, and the Z direction without taking into consideration the orientations thereof. However, if different types of tubular members 70 are to be used depending on the connection directions or if the orientations in which the tubular members 70 are to be connected are to be taken into consideration, the orthogonal-cross-sectional outer shape of each tubular member 70 and the outer shape of the angular tube section 11 of the first joining member as viewed from the Z direction may be rectangular. Even in such a case, the size and shape can be set such that the side surfaces of the components of the framework structure are flush with each other.

## Claims

1. A joining member comprising a first joining member, a second joining member, and a securing member,
wherein the first joining member comprises:
a rectangular-parallelepiped or cubical angular-pipe-like angular tube section;
a pair of first insertion segments extending from each of at least two side surfaces of four side surfaces parallel to a Z direction as an axial direction of the angular tube section, the pair of first insertion segments extending in an X direction or a Y direction orthogonal to the Z direction from positions located inward by a predetermined distance relative to a pair of side edges, extending in the Z direction, of each of the at least two side surfaces; and
a securing slit that passes in a thickness direction through each of an opposing pair of the side surfaces of the angular tube section and to which the securing member is inserted,
wherein the second joining member comprises:
a square or rectangular planar portion;
a pair of second insertion segments extending perpendicularly from the planar portion respectively along a pair of side edges of one of surfaces of the planar portion;
a pair of linkage insertion segments extending perpendicularly from the planar portion respectively along the pair of side edges of a surface opposite the surface of the planar portion from which the second insertion segments extend, the pair of linkage insertion segments being inserted in the angular tube section; and
a securing member retainer provided between the pair of linkage insertion segments and for retaining the securing member therein.

2. A framework structure constructed by joining tubular members as angular pipes to each other by using a joining member comprising a first joining member, a second joining member, and a securing member,
wherein the first joining member comprises:
a rectangular-parallelepiped or cubical angular-pipe-like angular tube section;
a pair of first insertion segments extending from each of at least two side surfaces of four side surfaces parallel to a Z direction as an axial direction of the angular tube section, the pair of first insertion segments extending in an X direction or a Y direction orthogonal to the Z direction from positions located inward by a predetermined distance relative to a pair of side edges, extending in the Z direction, of each of the at least two side surfaces; and
a securing slit that passes in a thickness direction through each of an opposing pair of the side surfaces of the angular tube section and to which the securing member is inserted,
wherein the second joining member comprises:
a square or rectangular planar portion;
a pair of second insertion segments extending perpendicularly from the planar portion respectively along a pair of side edges of one of surfaces of the planar portion;
a pair of linkage insertion segments extending perpendicularly from the planar portion respectively along the pair of side edges of a surface opposite the surface of the planar portion from which the second insertion segments extend, the pair of linkage insertion segments being inserted in the angular tube section; and
a securing member retainer provided between the pair of linkage insertion segments and for retaining the securing member therein,
wherein the second joining member is secured to the first joining member as a result of the pair of linkage insertion segments being inserted in the angular tube section and the securing member inserted in the securing slit being retained by the securing member retainer, and
wherein a plurality of the tubular members are connected to each other as a result of the pair of first insertion segments and the pair of second insertion segments being inserted into ends of the tubular members that are different from each other.
